# EUROPEAN PATENT SPECIFICATION

(11) **EP 4 600 062 B1**
(45) Date of publication and mention of the grant of the patent: **28.10.2026**
(21) Application number: 25151051.7
(22) Date of filing: 09.01.2025
(51) Int. Cl.: B60K 1/04, B60P 1/28, E02F 9/20, B60K 11/06, B60K 1/00

(54) **A DUMPER VEHICLE**
KIPPERFAHRZEUG
VÉHICULE À BENNE BASCULANTE

(30) Priority: 09.02.2024 GB 202401830
(43) Date of publication of application: 13.08.2025
(73) Proprietor: J.C. Bamford Excavators Limited, Uttoxeter Staffordshire ST14 5JP (GB)
(72) Inventor: HAWORTH, Robert, Uttoxeter (GB); INGRAM, Scott, Uttoxeter (GB); PIDD, Alexander, Uttoxeter (GB); JEFFERY, Lee, Uttoxeter (GB)
(74) Representative: Sugden, Mark William

(56) References cited:
- CN-A- 114 701 341
- DE-U1- 202016 101 145
- GB-A- 2 258 210

## Description

### FIELD

The present teachings relate to a dumper vehicle.

### BACKGROUND

Dumper vehicles, often referred to as "site dumpers" are manufactured in various different sizes to suit the needs of the application, ranging from those required for small building sites to those required for large scale construction projects. Such dumper vehicle typically include an open topped container, or skip, for transporting and dumping material.

Conventionally, dumper vehicles of the type referred to above are powered by diesel combustion engines. However, there is a general need to reduce vehicle emissions in the face of global warming leading to working machine OEMs considering alternative power and drive arrangements. Proposed alternatives include, battery, hydrogen fuel cells, hydrogen internal combustion engines and various hybrid options, etc.

The present invention seeks to provide a solution to the above problem.

DE202016101145U1 relates to an electric dumper vehicle having an energy storage unit which is located in an area above and at least partly behind the rear axle.

### SUMMARY

The present teachings provide a dumper vehicle according to the appended claims.

A first aspect of the present teachings relates to a dumper vehicle.

The dumper vehicle may comprise a chassis. The dumper vehicle may comprise a ground engaging propulsion structure, for example mounted to the chassis. The dumper vehicle may comprise an operator seat, for example supported by the chassis. The dumper vehicle may comprise a body, for example supported by the chassis. The dumper vehicle may comprise a drive arrangement. The drive arrangement may comprise an electric motor, for example housed within the body, said electric motor configured to provide, at least in part, tractive power to the ground engaging propulsion structure. The dumper vehicle may comprise an open topped container for carrying a load therein supported by the chassis. The container may be moveable between a transport position for transporting a load and a discharge position for discharging of a load.

Advantageously, providing a dumper vehicle powered by a drive arrangement with an electric motor reduces vehicle emissions in the face of global warming, thereby improving the sustainability of the dumper vehicle.

The drive arrangement may comprise a cooling fan configured to cool the electric motor.

The dumper vehicle may comprise a controller configured to control the cooling fan based on one or more parameters associated with the dumper vehicle.

In an electric dumper vehicle, the electric motor arrangement is considerably quieter than an internal combustion engine arrangement. As such, noise generated by the cooling fan appears considerably lounder to an operator. The controller controls activation and deactivation of the cooling fan so that the cooling fan is running only when cooling of the electric motor is desirable. This helps to reduce noise generated by the cooling fan without compromising cooling of the electric motor.

The controller may be configured to control a rotational speed of the cooling fan. The controller may be configured to control the rotational speed of the cooling fan based on one or more parameters associated with the dumper vehicle.

Advantageously, controlling rotational speed of the cooling fan helps to control cooling of the electric motor, whilst controlling the level of noise generated by rotation of the cooling fan.

The dumper vehicle may comprise a temperature sensor configured to determine an electric motor temperature at or near the electric motor. The controller may be configured to activate and deactivate the cooling fan based on the determined electric motor temperature.

Advantageously, controlling the cooling fan based on electric motor temperature helps to provide sufficient cooling of the electric motor whilst minimising noise generated by the cooling fan when lower levels of cooling are sufficient to cool the electric motor.

The controller may be configured to activate the cooling fan at a low speed when the electric motor temperature reaches a first predetermined temperature threshold. The first predetermined temperature threshold may be in the range 53°C to 57°C. The first predetermined temperature threshold may be in the range 54°C to 56°C, for example approximately 55°C.

Advantageously, the control logic provides sufficient cooling to the electric motor when the electric motor reaches the predetermined temperature threshold, whilst minimising noise from the cooling fan.

The controller may be configured to activate the cooling fan at a high speed when the electric motor temperature reaches a second predetermined temperature threshold. The second predetermined temperature may be greater than the first predetermined threshold. The second predetermined temperature threshold may be in the range 65°C to 69°C. The second predetermined temperature threshold may be in the range 66°C to 68°C, for example approximately 67°C.

Advantageously, the control logic helps to provide sufficient cooling to the electric motor when the electric motor reaches a high temperature, regardless of the noise generated by the cooling fan.

The controller may be configured to deactivate the cooling fan when the electric motor temperature is at or below a third predetermined temperature threshold. The third predetermined temperature threshold may be below the first predetermined temperature threshold. The third predetermined threshold may be approximately 54°C, for example approximately 50°C.

Advantageously, deactivating the cooling fan when the electric motor temperature sensor is below the third predetermined temperature threshold helps to reduce noise generated by the cooling fan without comprising efficiency of the electric motor.

The controller may be configured to control the cooling fan based on a selected state of a forward/neutral/reverse (FNR) drive selector.

The controller may be configured to activate the cooling fan at a low speed when the drive selector is in the neutral state. The controller may be configured to activate the cooling fan at a low speed when the drive selector is in the neutral state irrespective of the electric motor temperature.

When the FNR selector is in neutral, the electric motor is typically driven at a lower rotational speed resulting in lower temperatures of the electric motor. This means that low speed cooling of the electric motor is likely sufficient to cool the electric motor, and noise of the cooling fan is minimised.

An upper surface of the body may comprise a floorplate. The electric motor may be located below, for example immediately below, the floorplate.

Advantageously, locating the electric motor below the floorplate helps to improve packaging of the dumper vehicle and improves access to the electric motor.

The cooling fan may be interposed between the floorplate and the electric motor.

Advantageously, located the cooling fan between the floorplate and the electric motor helps to utilise "dead space" of the dumper vehicle, thereby improving space efficiency of the dumper vehicle and reducing an axial length of the drive arrangement.

The floorplate may comprise one or more apertures defining a flow path therethrough.

The cooling fan may be configured and arranged to draw air through the one or more apertures and over the electric motor.

Advantageously, the one or more apertures draw "clean" air through the cooling fan, as opposed to air from below the electric motor which may be contaminated with dust and debris. Such dust and debris may cause blockages of the electric motor, or be drawn through the floorplate and up towards the operator seat.

The cooling fan may define an axis of rotation. The axis of rotation of the cooling fan may extend transversely to a fore-aft axis of the dumper vehicle.

Advantageously, orientating the cooling fan transverse to the fore-aft axis helps to locate the cooling fan below the floorplate in the space between the floorplate and the electric motor. This helps to reduce an axial length of the drive arrangement.

The cooling fan may comprise a mounting arrangement configured to mount the cooling fan to the body. The mounting arrangement may be configured to mount the cooling fan to the body at a plurality of locations.

Advantageously, the mounting arrangement helps to facilitate simple and secure mounting of the cooling fan to the body.

The dumper vehicle may comprise a lighting arrangement and a floorplate on an upper surface of the body arranged in front of the operator seat. The lighting arrangement may comprise at least one light emitting member configured and arranged to illuminate at least a portion of the body, optionally a portion of the floorplate.

Advantageously, the lighting arrangement helps to improve safety of the dumper vehicle by illuminating the body, for example the floorplate.

The body may comprise an operator control console mounted thereto. The floorplate may be arranged between the operator seat and the operator control console. The at least one lighting member may be located on the operator control console. The at least one lighting member may be located on an underside of the operator control console.

Advantageously, providing the at least one lighting member on the operator control console helps to utilise the space of the operator control console to house the lighting arrangement. Additionally, as the floorplate is arranged between the operator control console and the operator seat, the lighting members are positioned to at least partially illuminate the floorplate.

The at least one lighting member may be located on an angled surface of the underside of the operator control console.

Advantageously, providing the at least one lighting member on the angled surface is a simple means of directing light towards the body.

The body may comprise a step arrangement. The step arrangement may be located adjacent to the floorplate. The at least one lighting member may be configured and arranged to at least partially illuminate at least one step of the step arrangement.

Advantageously, illuminating the step arrangement helps to improve safety of the dumper vehicle when the operator uses the access step arrangement to descend/ascend the dumper vehicle.

The dumper vehicle may comprise a controller configured to control activation and deactivation of the lighting arrangement.

The controller may be configured to activate or deactivate the lighting arrangement based on one or more of: an active or inactive state of a vehicle headlight arrangement; a position of the operator seat; an active or inactive state of the dumper vehicle; an open or closed position of a cab door of an operator cab.

Advantageously, the controller activating and deactivating the lighting arrangement may help to increase lifespan of the battery packs, as the lighting arrangement is deactivated in the event that the lighting arrangement is not needed and has been left on accidentally. This helps to prevent the battery packs from being accidentally drained, and having to be removed or replaced from the dumper vehicle which is expensive and time consuming.

The dumper vehicle may comprise a seat sensor arrangement configured to measure a position of the operator seat indicative of whether an operator is sat in the operator seat. The seat sensor arrangement may comprise one or more of a seat position sensor, a weight sensor and/or a seatbelt sensor.

Advantageously, the seat sensor arrangement helps to detect whether an operator is sat in the operator seat, such that the controller can deactivate and/or activate the lighting arrangement so as to help reduce the lifespan of the electrical storage assembly.

The dumper vehicle may comprise an override device configured to override the controller to activate the lighting arrangement. The override device may be an actuation member, switch or button.

Advantageously, the override device enables the lighting arrangement to be deactivated and/or activated in non-standard situations which do not follow the control logic of the controller.

The controller may be configured to deactivate the lighting arrangement after the lighting arrangement has been active for a predetermined time period.

Advantageously, the controller deactivating the lighting arrangement after the predetermined period of time may help to increase lifespan of the battery packs, as the lighting arrangement is deactivated in the event that the lighting arrangement is not needed and has been left on accidentally. This helps to prevent the battery packs from being accidentally drained, and having to be removed or replaced from the dumper vehicle which is expensive and time consuming.

The dumper vehicle may comprise an electric energy storage assembly configured to provide electric power to the electric motor. The electric energy storage assembly may be located rearward of the ground engaging structure.

The ground engaging propulsion structure may comprise a front axle with a pair of front wheels mounted thereto and a rear axle with a pair of rear wheels mounted thereto. The electric energy storage assembly may be at least partially located behind the rear axle. A majority of the electric energy storage assembly may be located behind the rear axle. An entirety of the electric energy storage assembly may be located behind the rear axle.

Advantageously, providing the electric energy storage assembly rearward of the ground engaging structure, for example rearward of the rear axle, helps to improve weight distribution and packaging of the dumper vehicle.

The electric energy storage assembly may define a centre of gravity. The centre of gravity of the electric energy storage assembly may be located rearward of the ground engaging structure. The centre of gravity of the electric energy storage device may be located rearward of the rear axle.

Advantageously, providing the centre of gravity of the electric energy storage assembly rearward of the ground engaging structure, for example rearward of the rear axle, helps to improve weight distribution and packaging of the dumper vehicle.

The dumper vehicle may comprise a power arrangement configured to provide electric power to the electric motor. The ground engaging propulsion structure may comprise a front axle with a pair of front wheels mounted thereto and a rear axle with a pair of rear wheels mounted thereto. The power arrangement may be located behind the rear axle. A majority of the power arrangement may be located behind the rear axle. An entirety of the power arrangement may be located behind the rear axle.

Advantageously, this arrangement helps to improve weight distribution and packing of the dumper vehicle.

The power arrangement may comprise a second subassembly. The second subassembly may comprise an electric energy storage assembly configured to provide electric power to the electric motor.

Advantageously, providing the second subassembly helps to improve ease of assembly of the power arrangement to the dumper vehicle because the second subassembly can be pre-assembled and then lifted on to the dumper vehicle during assembly of the dumper vehicle.

The second subassembly may further comprise a power distribution unit mounted to the electric energy storage assembly.

Advantageously, the power distribution unit helps to efficiently manage and distribute electrical power around the dumper vehicle.

The electric energy storage assembly may comprise a plurality of battery packs, for example two, three, four or more battery packs.

The power distribution unit may be mounted directly above the plurality of battery packs.

Advantageously, this arrangement helps to improve packaging and space efficiency of the dumper vehicle, and reduces an axial length of the second subassembly.

The power arrangement may comprise a third subassembly comprising an electric motor controller. The third subassembly may be mounted in front of the second subassembly.

Advantageously, providing the third subassembly helps to improve ease of assembling of the power arrangement to the dumper vehicle because the second subassembly can be pre-assembled and then lifted on to the dumper vehicle during assembly of the dumper vehicle.

The third subassembly may further comprise a cooling device mounted to the electric motor controller. The cooling device may be configured to cool the electric motor controller and/or the electric energy storage assembly.

Advantageously, the cooling device helps to provide cooling to the electric motor controller and/or electric energy storage assembly, thereby reducing the likelihood of overheating and increasing the efficiency of the power arrangement.

The power arrangement may comprise a first subassembly comprising an electrical connector for connecting the electric storage assembly to an external source of electrical power. The first subassembly may be located rearward of the second subassembly.

Advantageously, providing the third subassembly helps to improve ease of assembling of the electric motor controller to the dumper vehicle because the second subassembly can be pre-assembled and then lifted on to the dumper vehicle during assembly of the dumper vehicle.

Advantageously, locating the first subassembly rearward of the second subassembly helps to reduce a length of cabling between the first subassembly and the second subassembly.

The second subassembly may be located between the third subassembly and the first subassembly with respect to a fore-aft axis of the dumper vehicle.

Advantageously, this arrangement helps to reduce cabling between the third subassembly and the electric motor, as well as between the first subassembly and the third subassembly.

The body may define a rear wall located at a rear end of the dumper vehicle. The electrical connector may be arranged on the rear wall.

Advantageously, providing the electrical connector on the rear wall helps to provide convenient access to the electrical connector for charging.

The body may comprise a compartment accessed via an access panel located on the rear wall. The electrical connector may be housed within the compartment.

Advantageously, the compartment provides a convenient location for storing the electrical connector.

The compartment may be configured to store a charging cable arrangement.

Advantageously, this arrangement utilises the space in the compartment to store charging cables, thereby improving the space efficiency of the dumper vehicle.

The dumper vehicle may comprise a forward/neutral/reverse (FNR) drive selector. A controller may be configured to prevent selection of the forward and/or reverse states when the access panel is in an open position.

In the event that the dumper vehicle is being charged via the electrical connector, if the dumper vehicle is accidentally driven in forward or reverse, then the charging cable may be ripped out of the electrical connector. This may result in damage to the electrical connector and/or charging cables, and insufficient battery charging Advantageously, the control logic helps to prevent the operator from driving the dumper vehicle away from the external source of electrical power and damaging the charging cable and/or electrical connector.

The ground engaging propulsion structure may comprise a front axle with a pair of front wheels mounted thereto and a rear axle with a pair of rear wheels mounted thereto. The electric motor may be located in front of the rear axle. A majority of the electric motor may be located in front of the rear axle. An entirety of the electric motor may be located in front of the rear axle.

Advantageously, the arrangement of the electric motor helps to improve weight distribution of the electric motor.

The chassis may comprise a main chassis having the operator seat mounted thereto. The chassis may comprise an articulating front chassis having the container mounted thereto.

A lower extent of the front chassis may be arranged to be lower than a lower extent of the main chassis.

Advantageously, mounting the container on a front chassis that is lower than the chassis on which the operator is situated has been found to increase the visibility over the container of an operator sat in an operator seat. Furthermore, such an arrangement lowers the center of gravity of the dumper vehicle, which improves the overall stability of the vehicle both when the container is loaded and empty.

The dumper vehicle may comprise an electric energy storage assembly configured to provide electric power to the electric motor. A first distance may be defined between a rear of the dumper vehicle and a rear axle. A second distance may be defined between the rear of the dumper vehicle and a centre of gravity of the electric energy storage assembly. A ratio of the first distance to the second distance may be in the range 1: 1.25 to 1:4, for example in the range 1:1.75 to 1:3, optionally in the range 1:2 to 1:2.5.

A second aspect of the present teachings relates to a working vehicle.

The working vehicle may comprise a chassis. The working vehicle may comprise a ground engaging propulsion structure, for example mounted to the chassis. The working vehicle may comprise an operator seat, for example supported by the chassis. The working vehicle may comprise a body, for example supported by the chassis. The working vehicle may comprise a drive arrangement. The drive arrangement may comprise an electric motor, for example housed within the chassis, said electric motor configured to provide, at least in part, tractive power to the ground engaging propulsion structure.

Advantageously, providing a working vehicle powered by a drive arrangement with an electric motor reduces vehicle emissions in the face of global warming, thereby improving the sustainability of the working vehicle.

The drive arrangement may comprise a cooling fan configured to cool the electric motor. The working vehicle may comprise a controller configured to control the cooling fan based on one or more parameters associated with the working vehicle.

In an electric working vehicle, the electric motor arrangement is considerably quieter than an internal combustion engine arrangement. As such, noise generated by the cooling fan appears considerably lounder to an operator. The controller controls activation and deactivation of the cooling fan so that the cooling fan is running only when cooling of the electric motor is desirable. This helps to reduce noise generated by the cooling fan without compromising cooling of the electric motor.

The controller may be configured to control a rotational speed of the cooling fan based on one or more parameters associated with the working vehicle.

Advantageously, controlling rotational speed of the cooling fan helps to control cooling of the electric motor, whilst controlling the level of noise generated by rotation of the cooling fan.

The working vehicle may comprise a temperature sensor configured to determine an electric motor temperature at or near the electric motor. The controller may be configured to activate and deactivate the cooling fan based on the determined electric motor temperature.

Advantageously, controlling the cooling fan based on electric motor temperature helps to provide sufficient cooling of the electric motor whilst minimising noise generated by the cooling fan when lower levels of cooling are sufficient to cool the electric motor.

The controller may be configured to activate the cooling fan at a low speed when the electric motor temperature reaches a first predetermined temperature threshold. The first predetermined temperature threshold may be in the range 53°C to 57°C. The first predetermined temperature threshold may be in the range 54°C to 56°C, for example approximately 55°C.

Advantageously, the control logic provides sufficient cooling to the electric motor when the electric motor reaches the predetermined temperature threshold, whilst minimising noise from the cooling fan.

The controller may be configured to activate the cooling fan at a high speed when the electric motor temperature reaches a second predetermined temperature threshold. The second predetermined temperature may be greater than the first predetermined threshold. The second predetermined temperature threshold may be in the range 65°C to 69°C. The second predetermined temperature threshold may be in the range 66°C to 68°C, for example approximately 67°C.

Advantageously, the control logic helps to provide sufficient cooling to the electric motor when the electric motor reaches a high temperature, regardless of the noise generated by the cooling fan.

The controller may be configured to deactivate the cooling fan when the electric motor temperature is at or below a third predetermined temperature threshold. The third predetermined temperature threshold may be below the first predetermined temperature threshold. The third predetermined threshold may be approximately 54°C, for example approximately 50°C.

Advantageously, deactivating the cooling fan when the electric motor temperature sensor is below the third predetermined temperature threshold helps to reduce noise generated by the cooling fan without comprising efficiency of the electric motor.

The controller may be configured to control the cooling fan based on a selected state of a forward/neutral/reverse (FNR) drive selector.

The controller may be configured to activate the cooling fan at a low speed when the drive selector is in the neutral state. The controller may be configured to activate the cooling fan at a low speed when the drive selector is in the neutral state irrespective of the electric motor temperature.

When the FNR selector is in neutral, the electric motor is typically driven at a lower rotational speed resulting in lower temperatures of the electric motor. This means that low speed cooling of the electric motor is likely sufficient to cool the electric motor, and noise of the cooling fan is minimised.

The working vehicle may comprise a lighting arrangement and the lighting arrangement may comprise at least one light emitting member configured and arranged to illuminate at least a portion of the working vehicle.

Advantageously, the lighting arrangement helps to improve safety of the working vehicle by illuminating the working vehicle.

The working vehicle may comprise an operator control console mounted thereto. The at least one lighting member may be located on the operator control console. The at least one lighting member may be located on an underside of the operator control console.

Advantageously, providing the at least one lighting member on the operator control console helps to utilise the space of the operator control console to house the lighting arrangement.

The at least one lighting member may be located on an angled surface of the underside of the operator control console.

Advantageously, providing the at least one lighting member on the angled surface is a simple means of directing light towards the working vehicle.

The working vehicle may comprise a step arrangement. The at least one lighting member may be configured and arranged to at least partially illuminate at least one step of the step arrangement.

Advantageously, illuminating the step arrangement helps to improve safety of the working vehicle when the operator uses the access step arrangement to descend/ascend the working vehicle.

The working vehicle may comprise a controller configured to control activation and deactivation of the lighting arrangement.

The controller may be configured to activate or deactivate the lighting arrangement based on one or more of: an active or inactive state of a vehicle headlight arrangement; a position of an operator seat; an active or inactive state of the working vehicle; an open or closed position of a cab door of an operator cab.

Advantageously, the controller activating and deactivating the lighting arrangement may help to increase lifespan of the battery packs, as the lighting arrangement is deactivated in the event that the lighting arrangement is not needed and has been left on accidentally. This helps to prevent the battery packs from being accidentally drained, and having to be removed or replaced from the working vehicle which is expensive and time consuming.

The working vehicle may comprise a seat sensor arrangement configured to measure a position of the operator seat indicative of whether an operator is sat in the operator seat. The seat sensor arrangement may comprise one or more of a seat position sensor, a weight sensor and/or a seatbelt sensor.

Advantageously, the seat sensor arrangement helps to detect whether an operator is sat in the operator seat, such that the controller can deactivate and/or activate the lighting arrangement so as to help reduce the lifespan of the electrical storage assembly.

The working vehicle may comprise an override device configured to override the controller to activate the lighting arrangement. The override device may be an actuation member, switch or button.

Advantageously, the override device enables the lighting arrangement to be deactivated and/or activated in non-standard situations which do not follow the control logic of the controller.

The controller may be configured to deactivate the lighting arrangement after the lighting arrangement has been active for a predetermined time period.

Advantageously, the controller deactivating the lighting arrangement after the predetermined period of time may help to increase lifespan of the battery packs, as the lighting arrangement is deactivated in the event that the lighting arrangement is not needed and has been left on accidentally. This helps to prevent the battery packs from being accidentally drained, and having to be removed or replaced from the working vehicle which is expensive and time consuming.

### BRIEF DESCRIPTION OF DRAWINGS

Embodiments will now be described by way of example only with reference to the accompanying figures, in which:
Figures 1 and 2 are perspective views of a dumper vehicle according to the present teachings;
Figures 3 and 4 are perspective views of a drive arrangement of the dumper vehicle of Figures 1 and 2;
Figure 5 is a plan view of the drive arrangement of Figures 3 and 4;
Figure 6 is a schematic of a controller for controlling a cooling fan of the drive arrangement of Figures 3 and 4;
Figure 7 is a perspective view of a power arrangement of the dumper vehicle of Figures 1 and 2;
Figures 8 and 9 are plan views of the power arrangement of Figure 7;
Figure 10 is a rear view of a portion of a body of the dumper vehicle of Figures 1 and 2;
Figure 11 is a rear view of the dumper vehicle of Figures 1 and 2;
Figure 12 is a perspective view of a compartment of the body of Figure 10;
Figures 13 and 14 are perspective views of a lighting arrangement of the dumper vehicle of Figures 1 and 2; and
Figure 15 is a schematic of a controller for controlling the lighting arrangement of Figures 13 and 14.

### DETAILED DESCRIPTION

In the following detailed description, numerous specific details are set forth in order to provide a thorough understanding of various embodiments and the teachings. However, those skilled in the art will understand that: the present teachings may be practiced without these specific details or with known equivalents of these specific details; that the present teachings are not limited to the described embodiments; and, that the present teachings may be practiced in a variety of alternative embodiments. It will also be appreciated that well known methods, procedures, components, and systems may not have been described in detail.

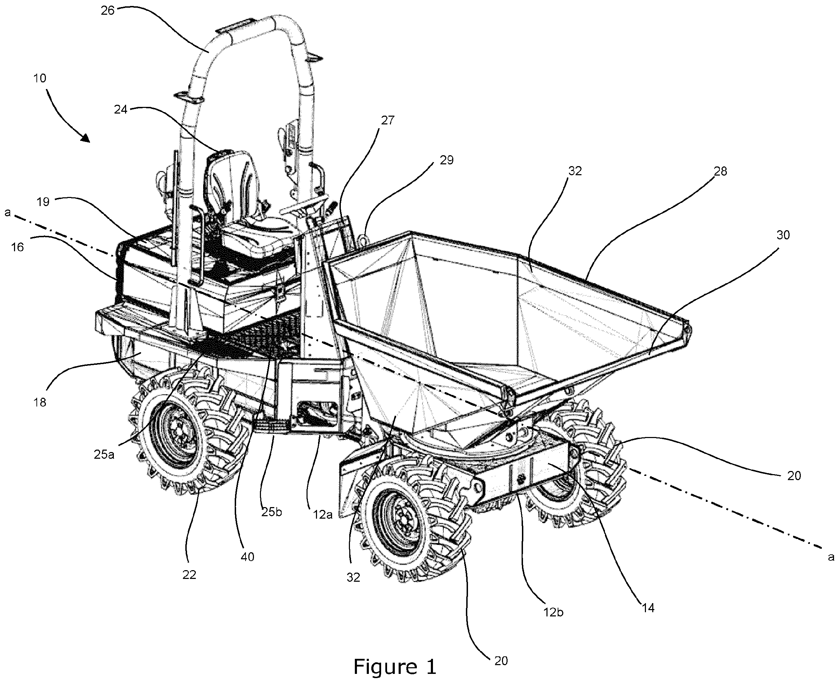

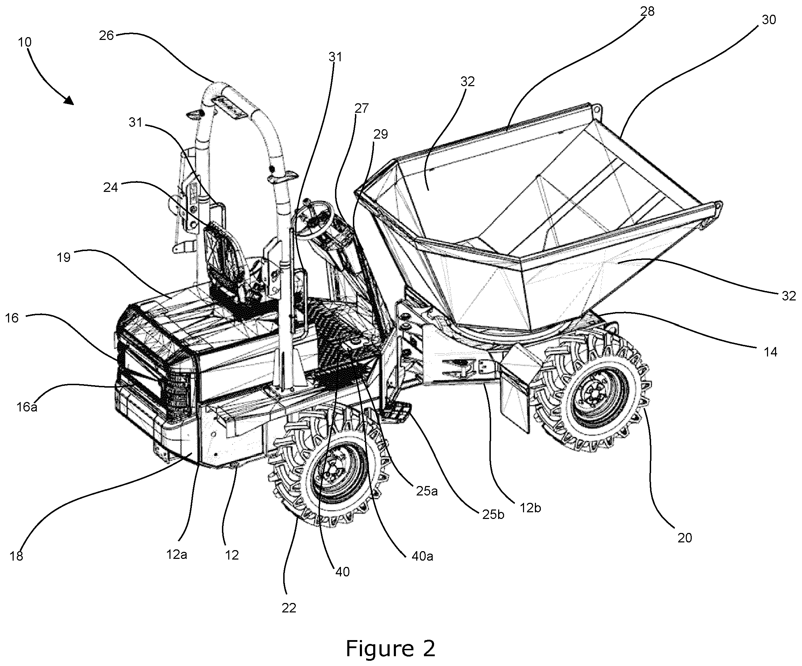

With reference to Figures 1 and 2, there is illustrated a dumper vehicle 10 according to an embodiment of the present teachings. The dumper vehicle 10 includes a chassis 12 having a front end 14 and a rear end 16 and a body 18 supported by the chassis 12. The dumper vehicle 10 includes a ground engaging propulsion structure 20, 22 mounted to the chassis 12. The ground engaging propulsion structure 20, 22 includes a front axle with a pair of front wheels 20 mounted thereto and a rear axle 22 with a pair of rear wheels mounted thereto. It shall be appreciated that in alternative embodiments, the ground engaging propulsion structure 20, 22 may include a pair of tracks.

The chassis 12 includes an operator seat 24 supported by the chassis 12. In the illustrated embodiment, the operator seat 24 is located proximate to the rear wheels 22 along a longitudinal length of the chassis 12. The operator seat 24 is provided within an open canopy 26. As illustrated in Figures 1 and 2, the open canopy 26 may include one or more handles 31, for example two handles 31 located on opposing side of the open canopy 26. The handles 31 are configured to assist the operator when ascending and descending the operator seat 24. However, it shall be appreciated that in alternative embodiments, an operator cab or an alternative roll cage or frame may be used instead. The operator seat 24 is mounted to the body 18. In particular, the operator seat 24 is mounted to a housing 19 defined by the body 18, as will be described in more detail below.

The body 18 defines an upper surface 18a including a floorplate 40. The upper surface 18a defines a cut-out section, and the floorplate 40 forms a cover over the cut-out section so as to define the upper surface 18a. The body 18 also includes an operator control console 27 mounted to the body 18. The floorplate 40 is arranged between the operator seat 24 and the operator control console 27. The floorplate 40 provides a substantially planar surface to support feet of the operator, and provides a surface on which the operator may walk, for example to mount and dismount the operator seat 24. The floorplate 40 may include recessed sections for receiving components of the dumper vehicle 10, for example a foot pedal arrangement accessible from the operator seat 24.

The operator control console 27 is located frontward of the operator seat 24. The operator control console 27 is configured to control one or more operations of the dumper vehicle 10, for example steering of the dumper vehicle 10. As illustrated in Figures 1 and 2, the operator control console 27 extends at an angle towards the operator seat 24 such that the operator can reach one or more control devices. The one or more control devices may be actuation devices such as a steering wheel, for controlling operations of the dumper vehicle 10. The operator console control 27 includes one or more handles 29 for assisting the operator when ascending and descending the floorplate 40 of the dumper vehicle 10. It shall be appreciated that the handle 29 may be omitted, and an alternative arrangement of operator control console 27 may be used.

The dumper vehicle 10 includes an access step arrangement 25a, 25b configured to provide access to the operator seat 24. The floorplate 40 is located adjacent the access step arrangement 25a, 25b. In the embodiment of the Figures, the dumper vehicle 10 includes an upper access step 25a and a lower access step 25b mounted to the body 18 on both sides of the dumper vehicle 10. This helps to provide access from both sides of the dumper vehicle 10. The floorplate 40 may be positioned between the upper access steps 25a on the opposing side of the dumper vehicle 10. The upper access step 25a on each side protrudes in a rearward direction beyond the rear axle. The open canopy 26 is mounted to the rearward protrusion of the upper access step 25a. In particular, the open canopy 26 is mounted either side of the housing 19. It shall be appreciated that in alternative embodiments, any suitable access arrangement, for example including any suitable number of access steps may be used. The access arrangement may be located only on one side of the dumper vehicle 10.

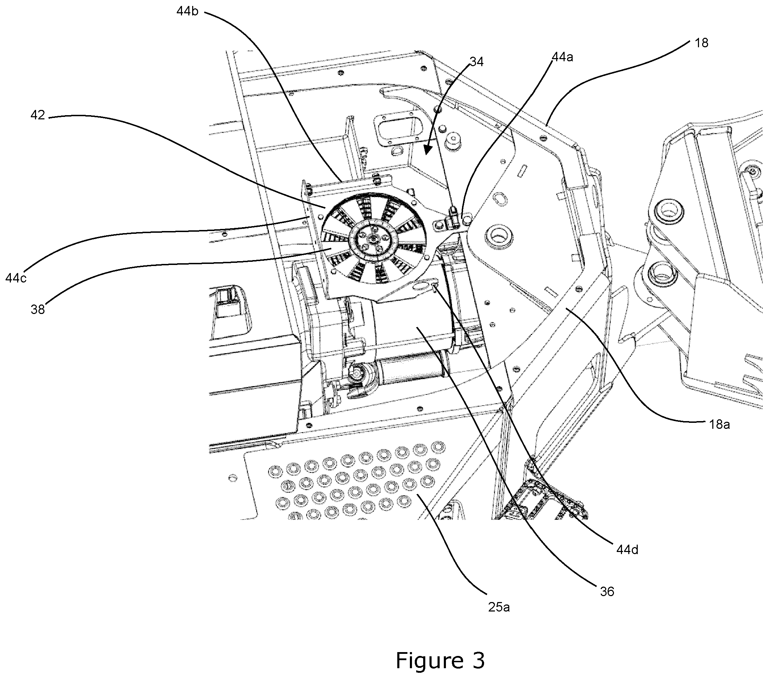

The dumper vehicle 10 includes a drive arrangement 34, illustrated in Figures 3 to 5, including an electric motor 36 housed within the body 18, said electric motor 36 configured to provide, at least in part, tractive power to the ground engaging propulsion structure 20, 22. An entirety of the electric motor 36 is located in front of the rear axle so as to improve weight distribution of the dumper vehicle 10. The dumper vehicle 10 further includes a power arrangement 35 configured to provide electric power to the electric motor 36.

An open topped container 28 for carrying a load therein, commonly referred to as a skip, is also mounted to the chassis 12. The container 28 is positioned above the front wheels 20, and a portion of the container 28 is located between the front wheels 20 and the rear wheels 22. The container 28 is pivotally mounted to the chassis 12, for example via a pivotable mount. This enables the container 28 to be moveable or pivotable between a transport position for transporting a load and a discharge position for discharging a load. In Figures 1 and 2, the container 28 is illustrated in the transport position. Actuation or movement of the container 28 between the transport positions and discharge position may be controlled via a control (not shown) on the control console 27.

The container 28 defines an upper edge thereof including a front edge 30. A pair of opposing sidewalls 32 are provided at opposing sides of the front edge 30. The combination of the front edge 30 and the opposing sidewalls 32 forms a chute at the front of the container 28. Providing such a chute enables a flow of material to be directed forwards away from the front wheels 20 when material is discharged from the container 28.

The chassis 12 is provided in two parts that are able to articulate with respect to each other. That is, the chassis 12 includes a main chassis 12a and a front chassis 12b. The rear wheels are provided on the main chassis 12a and the front wheels are provided on the front chassis 12b. The operator seat 24, the power arrangement 35 and the drive arrangement 34 are supported by the main chassis 12a in the embodiment shown in the Figures. The container 28 is mounted to the front chassis 12b. The main chassis 12a and the front chassis 12b are pivotally connected together via a linkage. The linkage is such that the front chassis 12b is able to pivot or articulate up to an angle of 35° with respect to the main chassis 12a.

The container 28 defines an internal volume for receiving a load therein. A majority of the internal volume of the container 28 is positioned behind the front axle and in front of the rear axle. This arrangement provides a more even weight distribution between the front axle and the rear axle when the container 28 is loaded with material. Providing a more even weight distribution between the front 14 and rear 16 of the dumper vehicle 10 improves the stability and traction of the dumper vehicle 10.

The drive arrangement includes a cooling fan 38, illustrated in Figures 3 to 6, configured to cool the electric motor 36. In the embodiment of the Figures, the electric motor 36 is located below the floorplate 40. The cooling fan 38 is interposed between the floorplate 40 and the electric motor 36. The cooling fan 38 may be positioned immediately below the floorplate 40 so that there are no components positioned between the cooling fan 38 and the floorplate 40. Put another way, a vacant space is defined between the cooling fan 38 and the floorplate 40. In addition, there are no components position between the cooling fan 38 and the electric motor 36. Put another way, a vacant space is defined between the cooling fan 38 and the electric motor 36. This helps to enhance air flow and improves access to the electric motor 36, for example for maintenance.

The floorplate 40 includes one or more apertures 40a, for example a plurality of apertures 40a as illustrated in Figure 2, defining a flow path therethrough. The cooling fan 38 is configured and arranged to draw air through the one or more apertures 40a and over the electric motor 36. The apertures 40a may be arranged in any suitable array. The apertures 40a may extend over a majority, for example an entirety, of the floorplate 40. The aperture arrangement facilitates "clean" air to be drawn through the fan, as opposed to air from below the electric motor 36 which may be contaminated with dust and debris. Such dust and debris may cause blockages of the electric motor 36, or may be drawn through the floorplate 40 and up towards the operator seat 24.

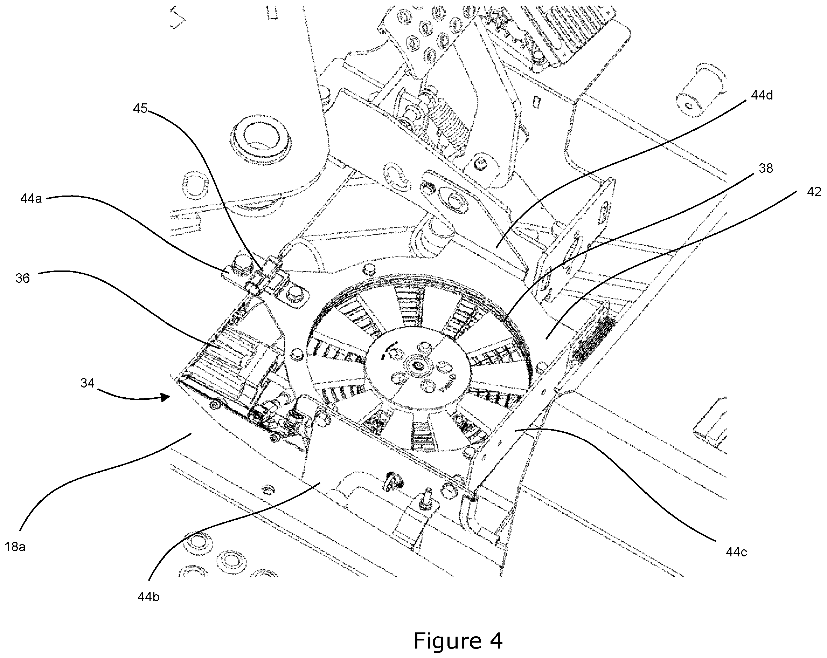

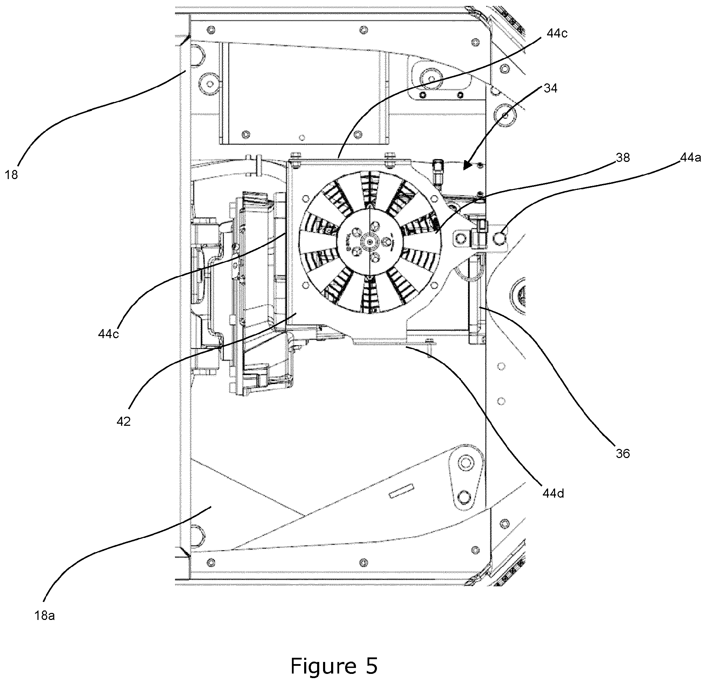

The cooling fan 38 defines an axis of rotation, and the cooling fan 38 is mounted such that an axis of rotation of the cooling fan 38 extends transversely to a fore-aft axis a-a of the dumper vehicle 10. Put another way, the axis of rotation of the cooling fan 38 extends substantially vertically, or transversely to the floorplate 40. The cooling fan 38 includes a mounting arrangement 42 configured to mount the cooling fan 38 to the body 18. As illustrated in Figures 4 and 5, the mounting arrangement 42 is an annular bracket 42 extending around the cooling fan 38.

The mounting arrangement 42 is mounted to the upper surface 18a of the body 18 by a tab 44a. The tab 44a and the upper surface 18a include corresponding bores for receiving a fastener. The tab 44a extends substantially parallel to the upper surface 18a. The tab 44a may include a power supply connection 45 mounted thereto for supplying power to the cooling fan 38. The mounting arrangement 42 is mounted to the body 18 by one or more mounting plates 44b-d illustrated in Figure 4 where three mounting plates 44b-d are provided. The mounting plate 44b extends between a side portion of the body 18 and the mounting arrangement 42. The mounting plate 44c extends between the mounting arrangement 42 and a portion of the body 18 located rearward of the electric motor 36.

The mounting plate 44d extending between the mounting arrangement 42 and the foot pedal arrangement, or a portion of the body 18 adjacent the foot pedal arrangement.. As such, the cooling fan 38 is mounted to the body 18 at a plurality of locations, thereby providing secure mounting and reducing vibration of the cooling fan 38, in use. It shall be appreciated that the cooling fan 38 may be mounted at any suitable located to the chassis 12 and/or the body 12. It shall be appreciated that in alternative embodiments, any suitable mounting arrangement may be used to mount the cooling fan 38 to the dumper vehicle 10.

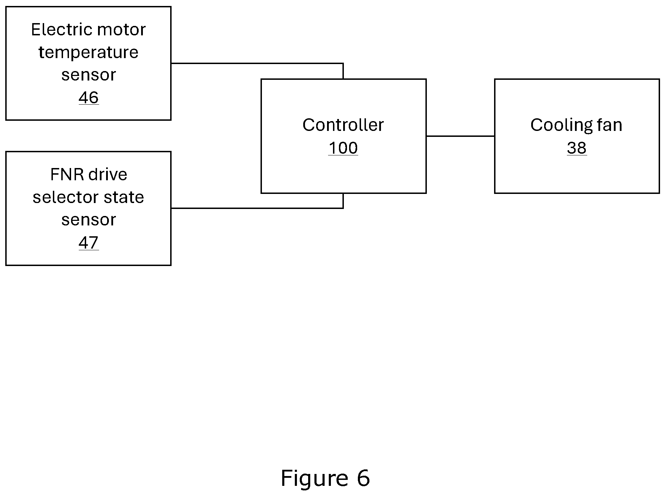

The dumper vehicle 10 includes and a controller 100 configured to control the cooling fan 38 based on one or more parameters associated with the dumper vehicle 10, illustrated in Figure 6. In the embodiment of Figure 6, the controller 100 is a nano intelligent control and command system (ICCS) controller, however any alternative controller may be used, for example any suitable microcontroller. The controller 100 may comprise: control circuitry; and/or processor circuitry; and/or at least one application specific integrated circuit (ASIC); and/or at least one field programmable gate array (FPGA); and/or single or multi-processor architectures; and/or sequential/parallel architectures; and/or at least one programmable logic controllers (PLCs); and/or at least one microprocessor; and/or at least one microcontroller; and/or a central processing unit (CPU), to perform the described methods. The controller 100 may include an associated memory or the memory may be located locally to the controller or remotely. The memory may be a non-volatile flash memory.

The controller 100 is configured to control a rotational speed of the cooling fan 38 based on one or more parameters associated with the dumper vehicle 10. The drive arrangement 34 includes a temperature sensor 46 configured to sense an electric motor temperature or to sense a temperature near the electric motor 36 indicative of the temperature of the electric motor 36. As such, in both embodiments the temperature sensed by the electric motor temperature sensor 46 will be referred to as the electric motor temperature even if the electric motor temperature sensor 46 does not directly measure electric motor temperature.

The controller 100 is configured to activate and deactivate the cooling fan 38 based on the determined electric motor temperature. In an electric dumper vehicle, the electric motor arrangement is considerably quieter than an internal combustion engine arrangement. As such, noise generated by the cooling fan 38 appears considerably lounder. However, the cooling fan 38 is important for preventing overheating of the electric motor 36. The controller 100 controls activation and deactivation of the cooling fan 38 so that the cooling fan 38 is running only when cooling of the electric motor 36 is desirable. This helps to reduce noise generated by the cooling fan 38 without compromising electric motor cooling.

The controller 100 is configured to activate the cooling fan 38 at a low speed when the electric motor temperature reaches a first predetermined temperature threshold. The low speed setting of the cooling fan 38 may be in the range 500rpm to 3000rpm, for example in the range 1000rpm to 2300rpm, for example in the range 1500rpm to 1800rpm. The first predetermined temperature threshold may be in the range 53°C to 57°C, optionally in the range 54°C to 56°C, for example approximately 55°C. This helps to provide sufficient cooling to the electric motor 36 when the electric motor 36 reaches a predetermined temperature threshold, whilst minimising noise from the cooling fan 38.

The controller 100 is configured to activate the cooling fan 38 at a high speed when the electric motor temperature reaches a second predetermined temperature threshold, wherein the second predetermined temperature threshold greater than the first predetermined temperature threshold. The high speed setting of the cooling fan 38 may be in the range 2500rpm to 4500rpm, for example in the range 3000rpm to 3700rpm, for example 3200rpm to 3500rpm. The second predetermined temperature threshold may be in the range 65°C to 69°C, optionally in the range 66°C to 68°C, for example approximately 67°C. This helps to provide sufficient cooling to the electric motor 36 when the electric motor 36 reaches a high temperature, regardless of the noise generated by the cooling fan 38.

The controller 100 is configured to deactivate the cooling fan 38 when the electric motor temperature is at or below a third predetermined temperature threshold, below the first predetermined temperature threshold. The third temperature threshold is below 54°C, for example below 50°C. Deactivating the cooling fan 38 when the electric motor temperature sensor 46 is below the third threshold helps to reduce noise generated by the cooling fan 38 without comprising efficiency of the electric motor 36.

It shall be appreciated that the first, second and third temperature thresholds as well as the high and low speed settings of the cooling fan 38 may vary depending on the type of electric motor and the type of cooling fan used. As such, the above ranges are exemplary. Furthermore, additional speed settings of the cooling fan 38 may be used in alternative embodiments. For example, in embodiments where the drive arrangement is driven using pulse-width modulation (PWM) control, the cooling fan 38 may be driven at any speed within a particular range. The high and low speeds may, therefore, vary throughout operation of the dumper vehicle 10. The high speed may refer to a high speed threshold and the low speed may refer to a low speed threshold (i.e. the cooling fan 38 may be drive above the high speed, or below the low speed).

In some embodiments, the controller 100 may be configured to control the cooling fan 38 based on a selected state of forward/neutral/reverse (FNR) drive selector. When the selector is in neutral, the electric motor 36 is driven at a lower rotational speed and the temperature of the electric motor 36 is likely to be low. Dumper vehicles typically spend a large proportion of operations with the FNR drive selector in the neutral state. In the neutral state, low speed cooling of the electric motor 36 is sufficient to cool the electric motor 36. In this embodiment, the dumper vehicle 10 may include an FNR drive selector state sensor 47 configured to detect the state of the FNR drive selector, and whether the FNR drive selector is in a forward/neutral/reverse state. In particular, the controller 100 is configured to activate the cooling fan 38 at a low speed when the drive selector is in the neutral state. For example, the controller 100 may be configured to activate the cooling fan 38 at a low speed when the drive selector is in the neutral state irrespective of the electric motor temperature. This helps to reduce noise generated by the cooling fan 38 when the FNR drive selector is in the neutral state, i.e. for a majority of operations of the dumper vehicle.

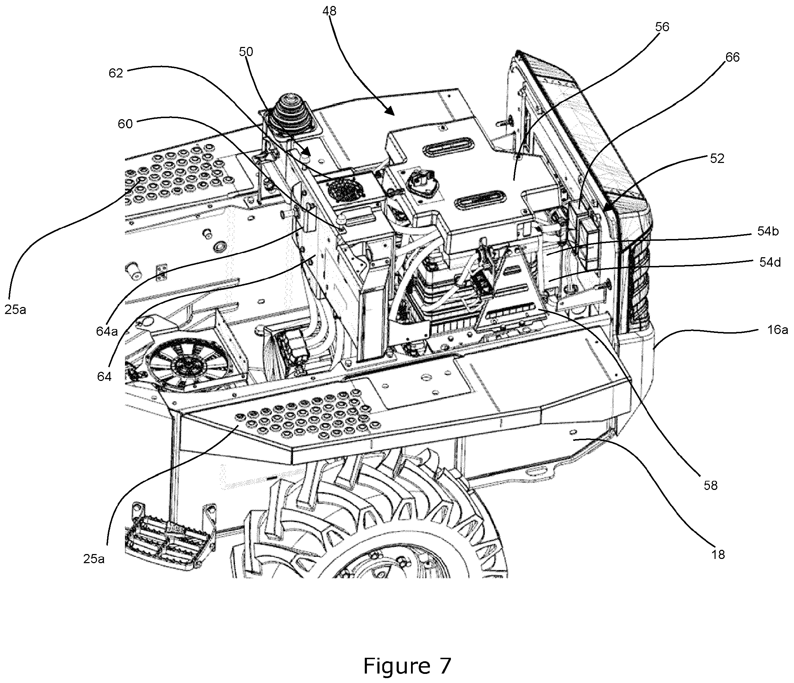

The power arrangement 35, illustrated in Figure 7 to 9, is housed within the body 18. The body 18 includes the housing 19 located at the rear 16 of the dumper vehicle 10 in which the power arrangement 35 is housed. As such, the housing 19 forms a protective cover over the power arrangement 35. As the operator seat 24 is mounted to an uppermost surface of the housing 19, the power arrangement 35 is at least partially located below the operator seat 24. The power arrangement 35 is located behind the rear axle. A majority or an entirety of the power arrangement 35 may be located behind the rear axle. This helps to improve weight distribution and packaging of the dumper vehicle 10. The power arrangement 35 includes first, second and third subassemblies 52, 48, 50. It shall be appreciated that in alternative embodiments, components of the first second and/or third subassemblies 52, 48, 50 may be omitted and/or alternative components may be included.

The second subassembly 48 includes an electric energy storage assembly 54a-d configured to provide electric power to the electric motor 36 and a power distribution unit 56 mounted to the electric energy storage assembly 54a-d. It shall be appreciated that the electric energy storage assembly 54a-d may be included in embodiments wherein the second subassembly 48 and/or additional components of the power arrangement 35 are omitted. It shall be appreciated that in embodiments where the dumper vehicle 10 is a hybrid electric vehicle (HEV), the power arrangement, for example the second subassembly 48, may also include an internal combustion engine (ICE). The ICE may be used to charge the electric energy storage assembly 54a-d, or to directly power the electric motor 36. It shall therefore be appreciated that the term "power arrangement" therefore refers to both electric and hybrid power arrangements. In such an embodiment, the ICE may be located adjacent the second subassembly 48, or at an alternative location rearward of the rear axle.

The electric energy storage assembly 54a-d and the power distribution unit 56 are located behind the rear axle. A majority or an entirety of the electric energy storage assembly 54a-d and/or the power distribution unit 56 may be located behind the rear axle. The electric energy storage assembly 54a-d comprises a plurality of battery packs 54a-d. In the embodiment illustrated in the Figures, the electric energy storage assembly includes four battery packs 54a-d, however in alternative embodiments, any suitable number of battery packs 54a-d may be used, for example two, three or more battery packs. Each of the battery packs is a 48V battery pack, such that the electric energy storage assembly is a 48V system.

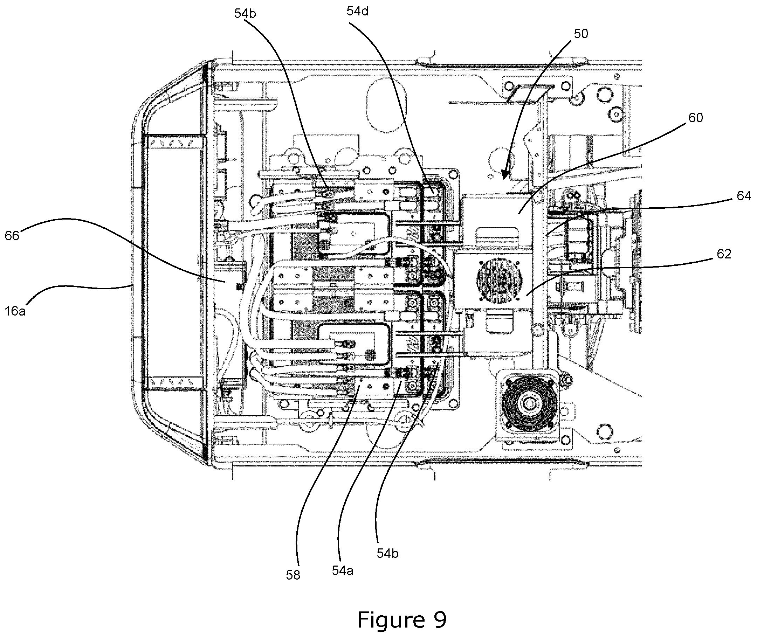

Each of the battery packs 54a-d includes a terminal portion located at a front end of each of the battery packs 54a-d, as illustrated in Figure 9. The terminals of each of the battery packs 54a-d are located on the terminal portion. The four battery packs 54a-d are stacked in pairs such that two of the battery packs 54a, 54b are upper battery packs 54a, 54b and two of the battery packs 54c, 54d are lower battery packs 54c, 54d. The upper battery packs 54a, 54b are vertically offset from the lower battery packs 54a, 54d. Put another way, the terminal portions of the lower battery packs 54c, 54d are located closed to the front 14 of the dumper vehicle 10 than the terminal portions of the upper battery packs 54a, 54b. As such, the terminal portions of the lower battery packs 54c, 54d are accessible despite being stacked below the upper battery packs 54a, 54b.

It shall be appreciated that in alternative embodiments, any suitable arrangement of battery packs may be used. For example, the battery packs 54a-d may be vertically aligned, or stacked in a single stack one on top of the other. Furthermore, any suitable alternatives to batteries may be used, for example supercapacitors.

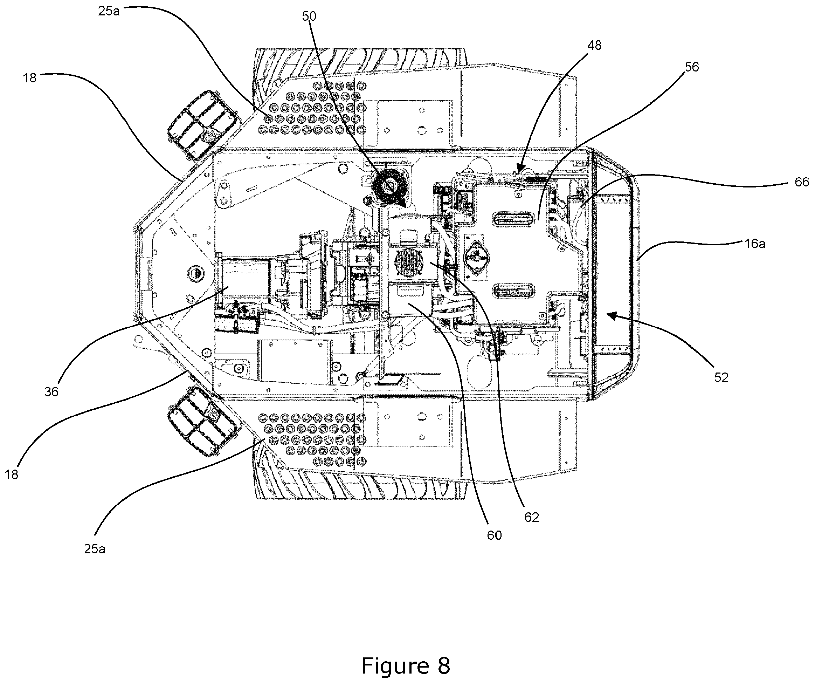

The power distribution unit 56, illustrated in Figures 7 and 8, is configured to manage and distribute electrical power around the dumper vehicle 10. The power distribution unit 56 receives power from the battery packs 54a-d and distributes it to components of the dumper vehicle 10, for example the electric motor 36. The power distribution unit 56 is mounted directly above the battery packs 54a-d. This helps to improve packaging and space efficiency of the dumper vehicle 10, and reduces an elongate length of the second subassembly 48. The second subassembly 48 includes a mounting arrangement 58 configured to mount the power distribution unit 56 to the battery packs 54a-d. The mounting arrangement 58 enables the second subassembly 48 to be assembled together prior to being lifted onto the chassis 12, thereby simplifying assembly of the dumper vehicle 10.

The third subassembly 50 includes an electric motor controller 60 and a cooling device 62. As illustrated in the plan views of Figures 8 and 9, the third subassembly 50 is mounted in front of the second subassembly 48. The electric motor controller 60 manages rotational speed, torque and direction of the electric motor 36 by controlling the supply of electric energy to the electric motor 36. The cooling device 62 is configured to cool the electric motor controller 60 and/or the electric energy storage assembly 54a-d. The cooling device 62 includes a cooling fan located in a housing. The fan defines a rotational axis, and the rotational axis is arranged substantially transversely to the fore-aft axis a-a of the dumper vehicle 10.

The cooling device 62 is mounted to the electric motor controller 60. In particular, the cooling device 62 is mounted adjacent the electric motor controller 60. The third subassembly 50 includes a frame 64 configured to mount the electric motor controller 60 to the cooling device 62. It shall be appreciated that the frame 64 may also be used to mount additional electric components, for example inverters. The frame 64 includes a front wall 64a configured to mount the electric motor controller 60 to the cooling device 62 as well as to provide protection to the power arrangement 35. As such, the cooling device 62 and the electric motor controller 60 can be assembled together prior to being lifted onto the chassis 12, thereby simplifying assembly of the dumper vehicle 10. The frame 64 extends partially between opposing sides of the dumper vehicle 10 in a lateral direction with respect to the fore-aft axis a-a. As such, the frame 64 may provide protection to the power arrangement 35, in particular the battery packs 54a-d, in the event of a collision or impact to the dumper vehicle 10.

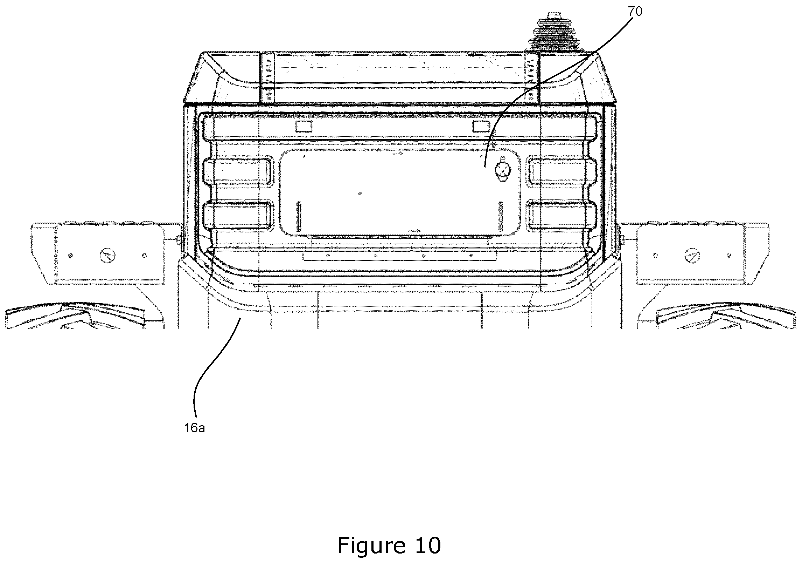

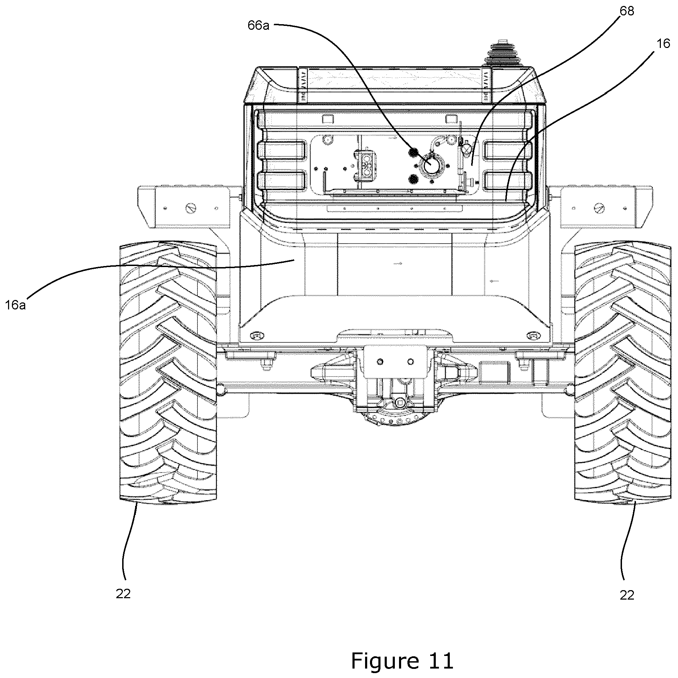

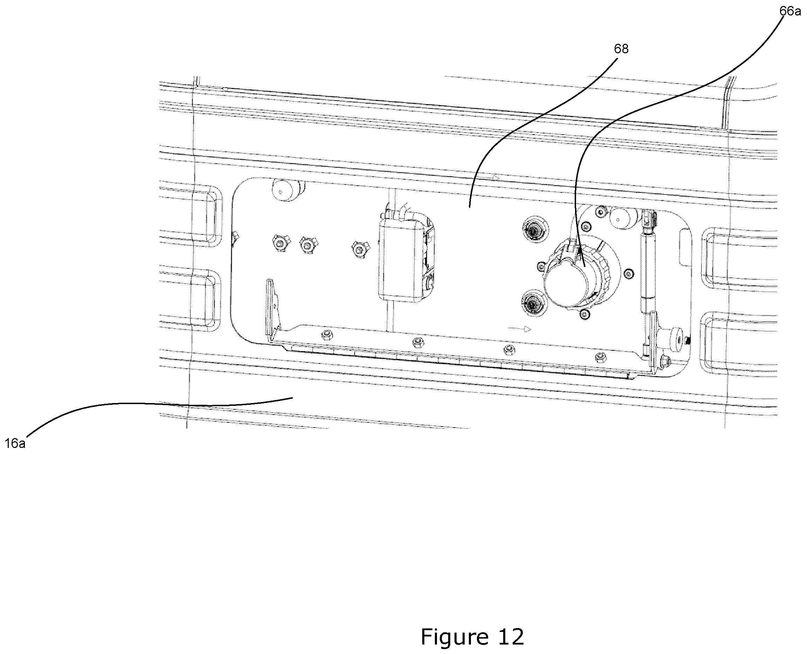

The first subassembly 52 is located rearward of the second subassembly 48. In the embodiment illustrated in Figures 7 to 12, the second subassembly 48 is located between the third subassembly 50 and the first subassembly. The first subassembly 52 includes an electrical connector 66 for connecting the battery packs 54a-d to an external source of electrical power. The electrical connector 66 includes a charging port 66a, illustrated in Figures 11 and 12. As such, the battery packs 54a-d can be plugged in and charged from the external source of electrical power.

The body defines a rear wall 16a located at the rear end 16 of the dumper vehicle 10, and the electrical connector 66 is arranged on the rear wall 16a. This arrangement is advantageous over arranging the electric connector 66 on a sidewall because the operator can access the operator seat 24 from either side of the dumper vehicle 10. The body 18 includes a compartment 68 accessed via an access panel 70 located on the rear wall 16a, and the electrical connector 66, including the charging port 66a, is housed within the compartment 68. The access panel 70 is moveable between an open position in which the electrical connector 66 is accessible, and a closed position. The compartment 68 further defines a space for housing a charging cable arrangement for connecting the battery pack 54a-d to the external source of electrical power.

In the event that the dumper vehicle 10 is being charged via the electrical connector 68 and the dumper vehicle 10 was accidentally driven in forward or reverse, then the charging cable may be ripped out of the electrical connector 68. This could result in damage to the charging cable and/or electrical connector 68, and may result in insufficient charging of the battery packs 54a-d. The electric motor controller 60 is configured to prevent selection of the forward and/or reverse states of the FNR drive selector when the access panel 70 is in the open position. This helps to prevent the operator from driving the dumper vehicle 10 away from the external source of electrical power and damaging the charging cable and/or electrical connector 66. The access panel 70 may include any suitable sensor, for example a position sensor, for sensing whether the access panel 70 is in the open position.

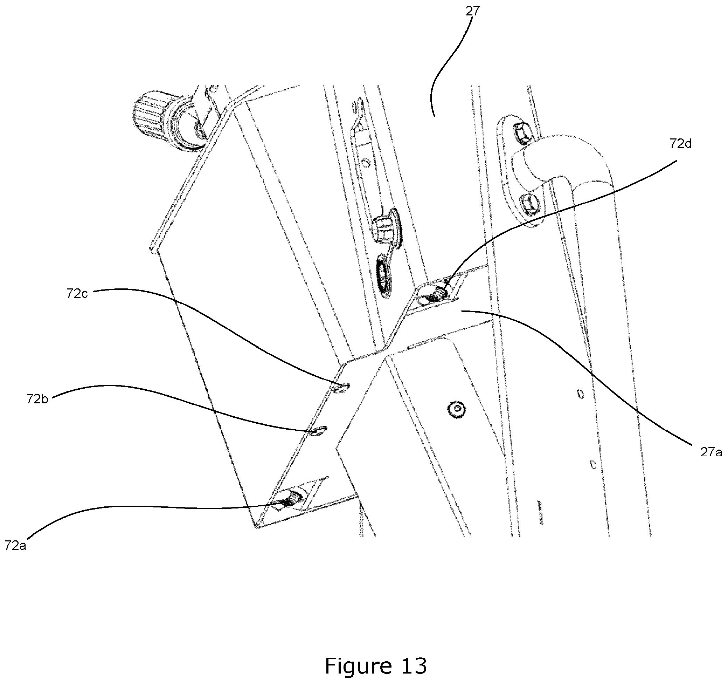

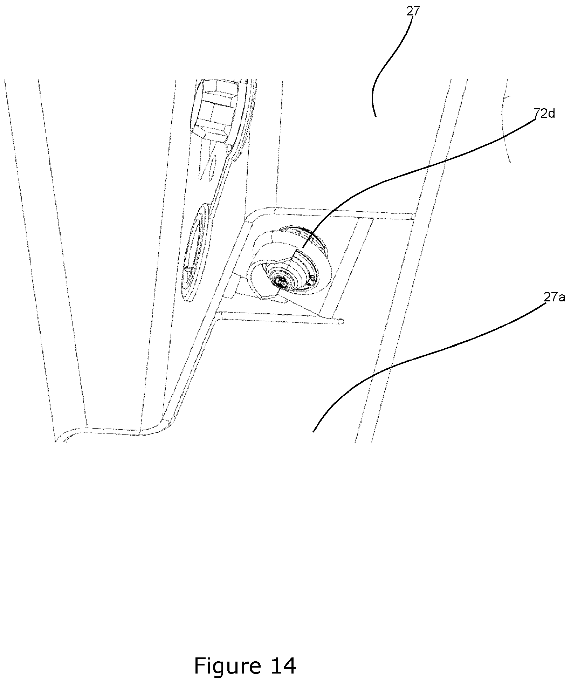

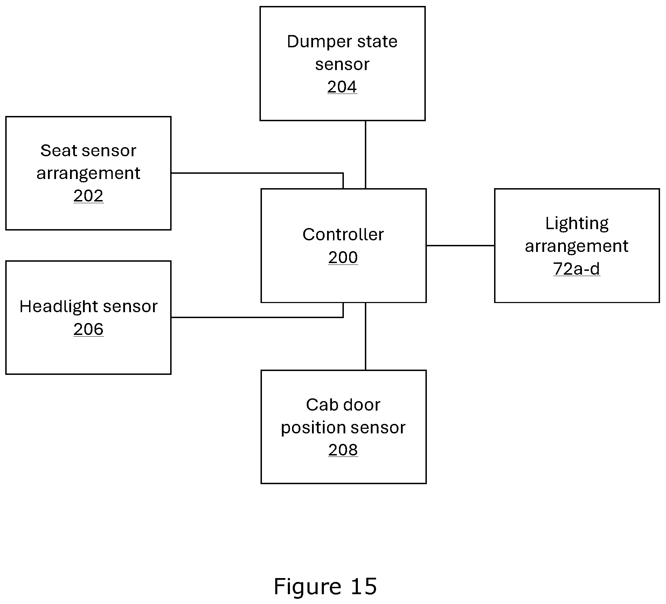

The dumper vehicle 10 includes a lighting arrangement 72a-d, illustrated in Figures 13 and 14, including at least one lighting member 72a-d configured and arranged to illuminate at least a portion of the body 18, for example at least a portion of the floorplate 40 and/or at least a portion of the access step arrangement 25a, 25b. The at least one light emitting members may be LED lights, or any suitable type of lighting member may be used. In the embodiment shown in Figures 14 and 15, four discrete light emitting members 72a-d are provided, however in alternative embodiments any suitable number of light emitting members 72a-d may be used. Alternatively, a lighting strip may be used, for example an LED lighting strip.

The at least one lighting member 72a-d is located on the operator control console 27. The light emitting members 72a-d are arranged spaced apart on the operator console 27. In particular, as illustrated in Figure 13, the at least one lighting member 72a-d may be located on an underside of the operator control console 27. The underside of the operator control console 27 includes an angled surface 27a. The angled surface 27a extends in a generally downward and rearward direction towards the floorplate 40. The angled surface 27a is substantially planar. The angled surface 27a is located above a lowermost edge of the operator console 27 such that operator console helps to direct light towards the floorplate 40 and/or access steps 25a, 25b.

The dumper vehicle 10 includes a controller 200, illustrated in Figure 15, configured to control activation and deactivation of the lighting arrangement 72a-d. The controller 200 may be the same as the controller 100, or a separate controller 200 may be used to control activation and deactivation of the lighting arrangement 72a-d. The controller may be a nano ICCS controller, however any alternative controller may be used. The controller 200 may include any of the features of the controller 100.

The controller 200 is configured to activate or deactivate the lighting arrangement 72a-d based on one or more of: an active or inactive state of a vehicle headlight arrangement (not shown); a position of the operator seat 24; an active or inactive state of the dumper vehicle 10; an open or closed position of a cab door, in embodiments where the dumper vehicle 10 includes an operator cab.

The controller 200 activating and deactivating the lighting arrangement 72a-d may help to increase lifespan of the battery packs 54a-d, as the lighting arrangement 72a-d is deactivated in the event that the lighting arrangement 72a-d is not needed and has been left on accidentally. This helps to prevent the battery packs 54a-d from being inadvertently drained, and having to be removed or replaced from the dumper vehicle 10 which is expensive and time consuming.

The operator seat 24 includes a seat sensor arrangement 202 configured to measure a position of the operator seat 24 indicative of whether the operator is sat in the operator seat 24. The seat sensor arrangement 202 may include one or more of a seat position sensor, a weight sensor and/or a seatbelt sensor. The dumper vehicle 10 may also include sensors to sense the active or inactive state of the vehicle headlight arrangement, the active or inactive state of the dumper vehicle 10 and/or the open or closed position of the cab door. As illustrated in Figure 16, the dumper vehicle 10 may include a dumper state sensor 204, a headlight sensor 206 and/or a cab door position sensor 208. The dumper state sensor 204 may be a sensor for sensing a position of a vehicle ignition, i.e. whether the vehicle ignition is on (and the dumper vehicle 10 is in the active state) or the vehicle ignition is off (and the dumper vehicle 10 is in the inactive state).

In a first example, the controller 200 may be configured to activate the lighting arrangement 72a-d when the vehicle headlight arrangement has been active within a predetermined time period and the dumper vehicle 10 goes from inactive to active, e.g. when the vehicle ignition is switched from off to on. The predetermined time may be in the range 5 minutes to 25 minutes, for example in the range 10 minutes to 20 minutes, e.g. 15 minutes. In a second example, the controller 200 may be configured to activate the lighting arrangement 72a-d when all of the following occur: the vehicle headlight arrangement has been active within the predetermined time period, the seat sensor arrangement 202 indicates that the operator is not sat in the operator seat 24, and the dumper vehicle 10 is in an active state, e.g. the vehicle ignition has been left on.

This helps to prevent the lighting arrangement 72a-d from being deactivated or off when the operator need illumination, whilst saving energy.

There may be a delay between the controller 200 determining that any of the above condition are met and the controller 200 activating the lighting arrangement 72a-d. The delay may be in the range 1 second to 10 seconds, for example 5 seconds. The controller 200 may be configured to activate the lighting arrangement 72a-d for a predetermined period of activation. The predetermined period of activation may be in the range 10 seconds to 120 seconds, for example 45 seconds to 90 seconds, for example 60 seconds.

The controller 200 may be configured to deactivate the lighting arrangement 72a-d after the predetermined period of activation, or based on any of the conditions discussed above.

The dumper vehicle 10 includes an override device (not shown) configured to override the controller 200 when the controller 200 activates and deactivates the lighting arrangement 72a-d. The override device may be an actuation member, for example a switch or a button. The override device may be located on the operator control console 27. The override device enables the operator to activate and deactivate the lighting arrangement 72a-d in non-standard situations which do not follow the control logic of the controller 200.

Although the invention has been described above in terms of the frame being provided in two parts, it will be appreciated that the frame could be provided as a single component. The region of the frame on which the container is mounted could be substantially lower than the region of the frame on which the operator's seat is mounted.

Although the controllers 100, 200 or any of the control logic described above (for example the access panel control logic) have been described in relation to an electric dumper vehicle 10, it shall be appreciated that the teachings are applicable to any type of working vehicle. For example, the controllers 100, 200 may be applicable to any of a skid-steer loader, a compact track loader, a wheel loader, a telescopic wheel loader, a slew excavator, a backhoe loader or a tractor, by way of example. These vehicles may include ICEs, or may be hybrid electric vehicles or electric vehicles. As such, components described in relation to the dumper vehicle, for example the chassis, body, operator seat, drive arrangement etc may be altered or omitted when the teachings are applied to alternative working vehicles.

The one or more embodiments are described above by way of example only and it will be appreciated that the variations are possible without departing from the scope of protection afforded by the appended claims.

## Claims

1. A dumper vehicle comprising:
a chassis (12);
a ground engaging propulsion structure mounted to the chassis (12), said ground engaging propulsion structure comprises a front axle with a pair of front wheels (20) mounted thereto and a rear axle with a pair of rear wheels (22) mounted thereto;
an operator seat (24) supported by the chassis (12);
a body (18) supported by the chassis (12);
a drive arrangement (34) comprising an electric motor (36) housed within the body (18), said electric motor (36) configured to provide, at least in part, tractive power to the ground engaging propulsion structure;
an electric energy storage assembly (54a-d) configured to provide electric power to the electric motor (36), wherein the electric energy storage assembly (54a-d) is located at least partially rearward of the rear axle;
an open topped container (28) for carrying a load therein supported by the chassis (12); and
a power arrangement (35) configured to provide electric power to the electric motor (36), wherein the power arrangement (35) comprises the electric energy storage assembly (54a-d), and wherein the power arrangement (35) is located behind the rear axle;
wherein the container (38) is moveable between a transport position for transporting a load and a discharge position for discharging of a load;
wherein the power arrangement (35) comprises a first subassembly (52) comprising an electrical connector (66) for connecting the electric energy storage assembly (54a-d) to an external source of electrical power;
wherein the body (18) defines a rear wall (16a) located at a rear end (16) of the dumper vehicle, and wherein the electrical connector (66) is arranged on the rear wall (16a); and
wherein the body (18) comprises a compartment (68) accessed via an access panel (70) located on the rear wall (16a), wherein the access panel (70) is moveable between an open position and a closed position, and wherein the electrical connector (66) is housed within the compartment (68).

2. The dumper vehicle according to claim 1, wherein the power arrangement (35) comprises a second subassembly (48) comprising the electric energy storage assembly (54a-d) and a power distribution unit (56) mounted to the electric energy storage assembly (54a-d).

3. The dumper vehicle according to claim 2, wherein the power distribution unit (56) is mounted directly above the electric energy storage assembly (54a-d).

4. The dumper vehicle according to claim 2 or 3, wherein the power arrangement comprises a third subassembly (50) comprising an electric motor controller (60).

5. The dumper vehicle according to claim 4, wherein the third subassembly (50) is mounted in front of the second subassembly (48).

6. The dumper vehicle according to claim 4 or 5, wherein the third (50) subassembly further comprises a cooling device (62) mounted to the electric motor controller (60), and wherein the cooling device (62) is configured to cool the electric motor controller (60) and/or the electric energy storage assembly (54a-d).

7. The dumper vehicle according to any one of claim 2 to claim 6, wherein the first subassembly (52) is located rearward of the second subassembly (48).

8. The dumper vehicle according to any preceding claim, wherein the compartment (68) is configured to store a charging cable arrangement.

9. The dumper vehicle according to any preceding claim, comprising a forward/neutral/reverse (FNR) drive selector (47), wherein a controller (100) is configured to prevent selection of the forward and/or reverse states when the access panel (70) is in the open position.

10. The dumper vehicle according to any preceding claim, wherein the drive arrangement (34) comprises a cooling fan (38) configured to cool the electric motor (36), and wherein the dumper vehicle comprises a controller (100) configured to control the cooling fan (38), for example to control a rotational speed of the cooling fan (38), based on one or more parameters associated with the dumper vehicle.

11. The dumper vehicle according to claim 10, comprising a temperature sensor (46) configured to determine an electric motor temperature at or near the electric motor (36), and wherein the controller (100) is configured to activate and deactivate the cooling fan (38) based on the determined electric motor temperature.

12. The dumper vehicle according to claim 11, wherein the controller (100) is configured to activate the cooling fan (38) at a low speed when the electric motor temperature reaches a first predetermined temperature threshold and/or wherein the controller (100) is configured to activate the cooling fan (38) at a high speed when the electric motor temperature reaches a second predetermined temperature threshold, wherein the second predetermined temperature is greater than the first predetermined threshold.

13. The dumper vehicle according to any one of claim 10 to claim 12, wherein the controller (100) is configured to control the cooling fan (38) based on a selected state of a forward/neutral/reverse (FNR) drive selector (47).

14. The dumper vehicle according to any preceding claim, wherein an upper surface (18a) of the body (18) comprises a floorplate (40), and wherein the electric motor (36) is located below, for example immediately below, the floorplate (40).

15. The dumper vehicle according to claim 14, when dependent on any one of claims 10 to 13, wherein the cooling fan (38) is interposed between the floorplate (40) and the electric motor (36), optionally wherein the floorplate (40) comprises one or more apertures (40a) defining a flow path therethrough, and optionally wherein the cooling fan (38) is configured and arranged to draw air through the one or more apertures (40a) and over the electric motor (36).

## Patentansprüche

1. Kipperfahrzeug, umfassend:
ein Fahrgestell (12);
eine bodeneingreifende Antriebsstruktur, die an dem Fahrgestell (12) montiert ist, wobei die bodeneingreifende Antriebsstruktur eine Vorderachse mit einem daran montierten Paar an Vorderrädern (20) und eine Hinterachse mit einem daran montierten Paar an Hinterrädern (22) umfasst;
einen Bedienersitz (24), der von dem Fahrgestell (12) getragen wird;
einen Aufbau (18), der von dem Fahrgestell (12) getragen wird;
eine Triebanordnung (34) umfassend einen Elektromotor (36), der innerhalb des Aufbaus (18) untergebracht ist, wobei der Elektromotor (36) ausgebildet ist, um mindestens teilweise der bodeneingreifenden Antriebsstruktur Zugleistung bereitzustellen;
eine elektrische Energiespeicheranordnung (54a-d), die ausgebildet ist, um dem Elektromotor (36) elektrische Leistung bereitzustellen, wobei die elektrische Energiespeicheranordnung (54a-d) mindestens teilweise hinter der Hinterachse angeordnet ist;
einen oben offenen Behälter (28) zum Tragen einer Last darin, der von dem Fahrgestell (12) getragen wird; und
eine Leistungsanordnung (35), die ausgebildet ist, um dem Elektromotor (36) elektrische Leistung bereitzustellen, wobei die Leistungsanordnung (35) die elektrische Energiespeicheranordnung (54a-d) umfasst, und wobei sich die Leistungsanordnung (35) hinter der Hinterachse befindet;
wobei der Behälter (38) zwischen einer Transportstellung zum Transportieren einer Last und einer Austragposition zum Austragen einer Last bewegbar ist;
wobei die Leistungsanordnung (35) eine erste Unteranordnung (52) umfasst, die einen elektrischen Steckverbinder (66) zum Verbinden der elektrischen Energiespeicheranordnung (54a-d) mit einer externen elektrischen Leistungsquelle umfasst;
wobei der Aufbau (18) eine Rückwand (16a) definiert, die sich an einem hinteren Ende (16) des Kipperfahrzeugs befindet, und wobei der elektrische Steckverbinder (66) an der Rückwand (16a) angeordnet ist; und
wobei der Aufbau (18) ein Fach (68) umfasst, das über eine sich an der Rückwand (16a) befindliche Zugangsklappe (70) zugänglich ist, wobei die Zugangsklappe (70) zwischen einer offenen Position und einer geschlossenen Position bewegbar ist, und wobei der elektrische Steckverbinder (66) innerhalb des Fachs (68) untergebracht ist.

2. Kipperfahrzeug nach Anspruch 1, wobei die Leistungsanordnung (35) eine zweite Unteranordnung (48) umfasst, welche die elektrische Energiespeicheranordnung (54a-d) und eine an der elektrischen Energiespeicheranordnung (54a-d) montierte Leistungsverteilereinheit (56) umfasst.

3. Kipperfahrzeug nach Anspruch 2, wobei die Leistungsverteilereinheit (56) direkt oberhalb der elektrischen Energiespeicheranordnung (54a-d) montiert ist.

4. Kipperfahrzeug nach Anspruch 2 oder 3, wobei die Leistungsanordnung eine dritte Unteranordnung (50) umfasst, die eine Elektromotor-Steuereinheit (60) umfasst.

5. Kipperfahrzeug nach Anspruch 4, wobei die dritte Unteranordnung (50) vor der zweiten Unteranordnung (48) montiert ist.

6. Kipperfahrzeug nach Anspruch 4 oder 5, wobei die dritte (50) Unteranordnung weiter eine an der Elektromotor-Steuereinheit (60) montierte Kühlvorrichtung (62) umfasst, und wobei die Kühlvorrichtung (62) ausgebildet ist, um die Elektromotor-Steuereinheit (60) und/oder die elektrische Energiespeicheranordnung (54a-d) zu kühlen.

7. Kipperfahrzeug nach einem von Anspruch 2 bis Anspruch 6, wobei sich die erste Unteranordnung (52) hinter der zweiten Unteranordnung (48) befindet.

8. Kipperfahrzeug nach einem vorstehenden Anspruch, wobei das Fach (68) ausgebildet ist, um eine Ladekabelanordnung zu verstauen.

9. Kipperfahrzeug nach einem vorstehenden Anspruch, umfassend einen Vorwärts- /Neutral-/Rückwärts-(FNR)-Fahrtrichtungswahlschalter (47), wobei eine Steuereinheit (100) ausgebildet ist, um eine Auswahl der Vorwärts- und/oder Rückwärts-Zustände zu verhindern, wenn sich die Zugangsklappe (70) in der offenen Position befindet.

10. Kipperfahrzeug nach einem vorstehenden Anspruch, wobei die Triebanordnung (34) einen Kühllüfter (38) umfasst, der ausgebildet ist, um den Elektromotor (36) zu kühlen, und wobei das Kipperfahrzeug eine Steuereinheit (100) umfasst, die ausgebildet ist, um den Kühllüfter (38) zu steuern, um beispielsweise eine Drehzahl des Kühllüfters (38) auf der Grundlage von einem oder mehreren dem Kipperfahrzeug zugeordneten Parametern zu steuern.

11. Kipperfahrzeug nach Anspruch 10, umfassend einen Temperatursensor (46), der ausgebildet ist, um eine Elektromotortemperatur am oder nahe dem Elektromotor (36) zu bestimmen, und wobei die Steuereinheit (100) ausgebildet ist, um den Kühllüfter (38) auf der Grundlage von der bestimmten Elektromotortemperatur zu aktivieren und zu deaktivieren.

12. Kipperfahrzeug nach Anspruch 11, wobei die Steuereinheit (100) ausgebildet ist, um den Kühllüfter (38) mit einer niedrigen Drehzahl zu aktivieren, wenn die Elektromotortemperatur eine erste vorbestimmte Temperaturschwelle erreicht, und/oder wobei die Steuereinheit (100) ausgebildet ist, um den Kühllüfter (38) mit einer hohen Drehzahl zu aktivieren, wenn die Elektromotortemperatur eine zweite vorbestimmte Temperaturschwelle erreicht, wobei die zweite vorbestimmte Temperatur höher ist als die erste vorbestimmte Schwelle.

13. Kipperfahrzeug nach einem von Anspruch 10 bis Anspruch 12, wobei die Steuereinheit (100) ausgebildet ist, um den Kühllüfter (38) auf der Grundlage von einem gewählten Zustand eines Vorwärts-/Neutral-/Rückwärts-(FNR)-Fahrtrichtungswahlschalters (47) zu steuern.

14. Kipperfahrzeug nach einem vorstehenden Anspruch, wobei eine obere Oberfläche (18a) des Aufbaus (18) eine Bodenplatte (40) umfasst, und wobei sich der Elektromotor (36) unterhalb, beispielsweise unmittelbar unterhalb der Bodenplatte (40), befindet.

15. Kipperfahrzeug nach Anspruch 14, wenn von einem der Ansprüche 10 bis 13 abhängig, wobei der Kühllüfter (38) zwischen der Bodenplatte (40) und dem Elektromotor (36) eingefügt ist, wobei die Bodenplatte (40) optional eine oder mehrere Öffnungen (40a) umfasst, die einen Strömungsweg dort hindurch definieren, und wobei der Kühllüfter (38) optional ausgebildet und angeordnet ist, um Luft durch die eine oder mehreren Öffnungen (40a) und über den Elektromotor (36) anzusaugen.

## Revendications

1. Véhicule à benne basculante comprenant :
un châssis (12) ;
une structure de propulsion en prise avec le sol, montée sur le châssis (12), ladite structure de propulsion en prise avec le sol comprenant un essieu avant sur lequel est montée une paire de roues avant (20) et un essieu arrière sur lequel est montée une paire de roues arrière (22) ;
un siège d'opérateur (24) supporté par le châssis (12) ;
une carrosserie (18) supportée par le châssis (12) ;
un agencement d'entraînement (34) comprenant un moteur électrique (36) logé à l'intérieur de la carrosserie (18), ledit moteur électrique (36) étant configuré pour fournir, au moins en partie, une puissance de traction à la structure de propulsion en prise avec le sol ;
un ensemble (54a-d) de stockage d'énergie électrique configuré pour fournir une puissance électrique au moteur électrique (36), dans lequel l'ensemble (54a-d) de stockage d'énergie électrique est situé au moins partiellement en arrière de l'essieu arrière ;
une benne (28) à partie supérieure ouverte, destinée à transporter une charge dans celle-ci, supportée par le châssis (12) ; et
un agencement de puissance (35) configuré pour fournir une puissance électrique au moteur électrique (36), dans lequel l'agencement de puissance (35) comprend l'ensemble (54a-d) de stockage d'énergie électrique, et dans lequel l'agencement de puissance (35) est situé derrière l'essieu arrière ;
dans lequel la benne (28) est mobile entre une position de transport pour transporter une charge et une position de déchargement pour décharger une charge ;
dans lequel l'agencement de puissance (35) comprend un premier sous-ensemble (52) comprenant un connecteur électrique (66) pour relier l'ensemble (54ad) de stockage d'énergie électrique à une source externe d'alimentation électrique ;
dans lequel la carrosserie (18) définit une paroi arrière (16a) située au niveau d'une extrémité arrière (16) du véhicule à benne basculante, et dans lequel le connecteur électrique (66) est agencé sur la paroi arrière (16a) ; et
dans lequel la carrosserie (18) comprend un compartiment (68) accessible par l'intermédiaire d'un panneau d'accès (70) situé sur la paroi arrière (16a), dans lequel le panneau d'accès (70) est mobile entre une position ouverte et une position fermée, et dans lequel le connecteur électrique (66) est logé à l'intérieur du compartiment (68).

2. Véhicule à benne basculante selon la revendication 1, dans lequel l'agencement de puissance (35) comprend un deuxième sous-ensemble (48) comprenant l'ensemble (54a-d) de stockage d'énergie électrique et une unité (56) de distribution d'énergie montée sur l'ensemble (54a-d) de stockage d'énergie électrique.

3. Véhicule à benne basculante selon la revendication 2, dans lequel l'unité (56) de distribution d'énergie est montée directement au-dessus de l'ensemble (54a-d) de stockage d'énergie électrique.

4. Véhicule à benne basculante selon la revendication 2 ou la revendication 3, dans lequel l'agencement de puissance comprend un troisième sous-ensemble (50) comprenant un dispositif (60) de commande de moteur électrique.

5. Véhicule à benne basculante selon la revendication 4, dans lequel le troisième sous-ensemble (50) est monté devant le deuxième sous-ensemble (48).

6. Véhicule à benne basculante selon la revendication 4 ou la revendication 5, dans lequel le troisième sous-ensemble (50) comprend en outre un dispositif de refroidissement (62) monté sur le dispositif (60) de commande de moteur électrique, et dans lequel le dispositif de refroidissement (62) est configuré pour refroidir le dispositif (60) de commande de moteur électrique et/ou l'ensemble (54a-d) de stockage d'énergie électrique .

7. Véhicule à benne basculante selon l'une quelconque des revendications 2 à 6, dans lequel le premier sous-ensemble (52) est situé en arrière du deuxième sous-ensemble (48).

8. Véhicule à benne basculante selon une quelconque revendication précédente, dans lequel le compartiment (68) est configuré pour stocker un agencement de câbles de recharge.

9. Véhicule à benne basculante selon une quelconque revendication précédente, comprenant un sélecteur (47) de marche avant/point mort/marche arrière (FNR), dans lequel un dispositif de commande (100) est configuré pour empêcher la sélection des états de marche avant et/ou de marche arrière lorsque le panneau d'accès (70) est dans la position ouverte.

10. Véhicule à benne basculante selon une quelconque revendication précédente, dans lequel l'agencement d'entraînement (34) comprend un ventilateur de refroidissement (38) configuré pour refroidir le moteur électrique (36), et dans lequel le véhicule à benne basculante comprend un dispositif de commande (100) configurée pour commander le ventilateur de refroidissement (38), par exemple pour commander une vitesse de rotation du ventilateur de refroidissement (38), sur la base d'un ou de plusieurs paramètres associés au véhicule à benne basculante.

11. Véhicule à benne basculante selon la revendication 10, comprenant un capteur de température (46) configuré pour déterminer une température de moteur électrique au niveau du moteur électrique (36) ou à proximité de celui-ci, et dans lequel le dispositif de commande (100) est configuré pour activer et désactiver le ventilateur de refroidissement (38) sur la base de la température de moteur électrique déterminée.

12. Véhicule à benne basculante selon la revendication 11, dans lequel le dispositif de commande (100) est configuré pour activer le ventilateur de refroidissement (38) à une basse vitesse lorsque la température de moteur électrique atteint un premier seuil de température prédéterminé et/ou dans lequel le dispositif de commande (100) est configuré pour activer le ventilateur de refroidissement (38) à une haute vitesse lorsque la température de moteur électrique atteint un deuxième seuil de température prédéterminé, dans lequel la deuxième température prédéterminée est supérieure au premier seuil prédéterminé.

13. Véhicule à benne basculante selon l'une quelconque des revendications 10 à 12, dans lequel le dispositif de commande (100) est configuré pour commander le ventilateur de refroidissement (38) sur la base d'un état sélectionné d'un sélecteur (47) de marche avant/point mort/marche arrière (FNR).

14. Véhicule à benne basculante selon une quelconque revendication précédente, dans lequel une surface supérieure (18a) de la carrosserie (18) comprend une plaque de plancher (40), et dans lequel le moteur électrique (36) est situé en dessous de la plaque de plancher (40), par exemple immédiatement en dessous de celle-ci.

15. Véhicule à benne basculante selon la revendication 14, lorsqu'elle dépend de l'une quelconque des revendications 10 à 13, dans lequel le ventilateur de refroidissement (38) est interposé entre la plaque de plancher (40) et le moteur électrique (36), éventuellement dans lequel la plaque de plancher (40) comprend une ou plusieurs ouvertures (40a) définissant un trajet d'écoulement à travers celle-ci, et éventuellement dans lequel le ventilateur de refroidissement (38) est configuré et agencé pour aspirer de l'air à travers la une ou les plusieurs ouvertures (40a) et sur le moteur électrique (36).
